(19) Europäisches Patentamt
European Patent Office
Office européen des brevets

(11) Veröffentlichungsnummer: **0 544 170 B1**

# (12) EUROPÄISCHE PATENTSCHRIFT

(45) Veröffentlichungstag der Patentschrift: **10.05.95**

(51) Int. Cl.$^{6}$: **C09C 1/24**, C01G 49/06

(21) Anmeldenummer: **92119533.5**

(22) Anmeldetag: **16.11.92**

## (54) Thermostabile Eisenoxidpigmente, Verfahren zu ihrer Herstellung sowie deren Verwendung.

(30) Priorität: **28.11.91 DE 4139052**

(43) Veröffentlichungstag der Anmeldung:
**02.06.93 Patentblatt 93/22**

(45) Bekanntmachung des Hinweises auf die Patenterteilung:
**10.05.95 Patentblatt 95/19**

(84) Benannte Vertragsstaaten:
**DE FR GB IT**

(56) Entgegenhaltungen:
**EP-A- 0 054 266**
**EP-A- 0 090 241**
**EP-A- 0 302 342**
**DE-A- 2 744 598**
**FR-A- 2 281 410**

(73) Patentinhaber: **BAYER AG**
**D-51368 Leverkusen (DE)**

(72) Erfinder: **Jonas, Friedrich, Dr.**
**Krugenofen 15**
**W-5100 Aachen (DE)**
Erfinder: **Frankenau, Andreas, Dr.**
**Bethelstrasse 10**
**W-4150 Krefeld (DE)**
Erfinder: **Buxbaum, Gunter, Dr.**
**Holzapfelweg 2**
**W-4150 Krefeld (DE)**

EP 0 544 170 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Eisenoxidpigmente mit einem Eisen-(II)-Gehalt von mindestens 5 Gew.-% mit einer Beschichtung zur Erhöhung der Stabilität gegenüber Luftoxidation, Verfahren zur Herstellung dieser Pigmente sowie deren Verwendung.

Eisenoxidpigmente, welche Eisen in der Oxidationsstufe + 2 enthalten, stellen im Vergleich zum Eisen-(III)-oxid $Fe_2O_3$ thermodynamisch instabile Phasen dar, Sie können in Gegenwart von Luft beziehungsweise Sauerstoff partiell oder vollständig oxidiert werden,

Solche Reaktionen sind beispielsweise bei Eisenoxidschwarz-Pigmenten bekannt, die in ihrer Zusammensetzung und in ihrer Struktur dem Magnetit entsprechen, Das Pigment büßt durch die Oxidation seine wichtigsten Eigenschaft, nämlich die Farbe, ein und wird somit unbrauchbar. Die Oxidationsneigung nimmt in dem Maße zu wie die Feinteiligkeit und somit die spezifische Oberfläche der Pigmente.

Das gleiche gilt auch für Mischungen von Eisenoxidschwarz mit anderen Eisenoxid-Farbpigmenten -Eisenoxidrot beziehungsweise Eisenoxidgelb - wie sie für braune Farbtöne hergestellt werden.

Ist es bei den Farbpigmenten der Verlust der coloristischen Eigenschaften, der sie unbrauchbar macht, so ist es bei den Eisen(II)-haltigen Magnetpigmenten der Verlust der magnetischen Eigenschaften, der gleichfalls durch die Oxidation hervorgerufen wird. Gefährdet sind vor allem feinteilige Magnetitpigmente sowie Mischphasen zwischen Magnetit ($Fe_3O_4$) und Maghämit ($\gamma$-$Fe_2O_3$) mit hohem Eisen-(II)-Gehalt. Oxidationsempfindlich sind aber auch Mischphasen von Magnetit mit Maghämit und/oder Ferriten, wie z.B. Cobaltferrit und solche Magnetpigmente, die aus einem Kern aus $Fe_3O_4$ und $\gamma$-$Fe_2O_3$ und einer diesen Kern umgebenden Hülle aus magnetischen Metalloxiden - insbeondere des Eisens und des Cobalts - zusammengesetzt sind. In der Fachliteratur findet man neben der Bezeichnung "Mischphase" auch den Ausdruck "Berthollide" für die hier beschriebenen Zusammensetzungen.

Man hat bereits versucht, die Oxidationsempfindlichkeit feinteiliger ferrimagnetischer Magnetitpigmente durch Behandlung mit heterocyclischen organischen Verbindungen zu vermindern (DE-A 2 744 598). Die Behandlung hat gegenüber den unbehandelten Pigmenten eine erhebliche Verbesserung gebracht, die aber über ein bestimmtes Niveau hinaus nicht zu steigern war. Die eingesetzten Heterocyclen werden zudem nur physikalisch am Pigment adsorbiert und gehen daher weitgehend in die wasserlöslichen Bestandteile ein. Hieraus können Unverträglichkeiten in unterschiedlichen Bindemittelsystemen resultieren.

Aus der EP-A 90 241 ist weiterhin bekannt, daß Borsäure zur Stabilisierung Eisen-II-haltiger Eisenoxide eingesetzt werden kann. Die mit Borsäure stabilisierten Pigmente weisen eine mit heterocyclischen Verbindungen beschichteten Pigmenten vergleichbare Thermostabilität bei gleichzeitiger Verringerung der wasserlöslichen Bestandteile auf.

Überraschenderweie wurde jetzt gefunden, daß mit Verbindungen der allgemeinen Formel (I) beschichtete Eisen-II-haltige Eisenoxide gegenüber dem Stand der Technik höhere Thermostabilitäten aufweisen. Die zur Beschichtung der Pigmente eingesetzten Verbindungen entsprechen der Formel I

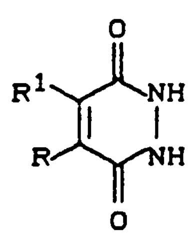

(I)

in der

R und $R^1$ gleich oder verschieden für Wasserstoff oder einen geradkettigen oder verzweigen Alkylrest mit 1-2 C-Atomen oder Halogen oder einen Arylrest mit 6-10 C-Atomen oder zusammen einen gegebenenfalls substituierten $C_{3-6}$-Alkylenrest oder für ringbildendes -CH=CH-CH=CH-stehen.

Bevorzugt sind folgende formelmäßig angegebenen Verbindungen:

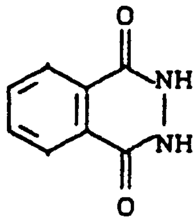 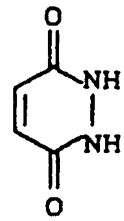

Bei den zu stabilisierenden Eisenoxidpigmenten mit einem Eisen-(II)-Gehalt kann es sich um Farbpigmente wie Eisenoxidschwarz und/oder Eisenoxidbraun handeln, es können aber auch magnetische Pigmente wie Magnetit oder Mischphasen von Magnetit mit Maghämit (Berthollide-Eisenoxide) und/oder Ferriten oder mit magnetischen Metalloxiden umhüllte Magnetite beziehungsweise Eisenoxide mit einem Oxidationszustand zwischen Magnetit und Maghämit sein.

Die Herstellung solcher Pigmente ist in der Literatur beschrieben und durch viele Verfahren zugänglich. Eisenoxidschwarz-Pigmente werden im technischen Maßstab hauptsächlich nach zwei Verfahren hergestellt (Ullmanns Encyklopädie der technischen Chemie, 4. Aufl., Bd. 18, S. 603, Verlag Chemie GmbH, Weinheim 1979): dem Fällungsverfahren, bei dem Eisen(II)salzlösungen unter Einleiten von Luft bei ca. 90 °C in der Nähe des Neutralpunktes mit Alkalien ausgefällt werden, bis ein Fe(III)/Fe(II)-Verhältnis von etwa 2 erreicht ist, und dem Laux-Verfahren bei dem Nitrobenzol mit metallischem Eisen zu Anilin reduziert wird und welches so gesteuert werden kann, daß farbstarke Eisenoxidschwarz-Pigmente entstehen.

Je nach Herstellungsverfahren und Reinheit der verwendeten Rohstoffe können Eisenoxidschwarz-Pigmente in wechselnden Mengen, gewöhnlich bis zu 5 Gew.-%, Nebenbestandteile wie z.B. $SiO_2$ oder $Al_2O_3$ enthalten.

Normalerweise ist auch das Fe(III)/Fe(II)-Verhältnis in den Verkaufsprodukten abweichend vom theoretischen Zahlenwert größer als 2 und liegt in der Regel zwischen 2,3 und 3,0. Eisen(II)-haltige Eisenoxidbraun-Pigmente werden zum weitaus größten Teil durch Mischen von Eisenoxidgelb und/oder Eisenoxidrot mit Eisenoxidschwarz hergestellt (Ullmanns Encyklopädie der technischen Chemie, wie oben). Zur Herstellung Eisen(II)-haltiger Eisenoxid-Magnetpigmente (Ullmanns Encyklopädie der technischen Chemie, 4. Aufl., Bd. 18, S. 643, Verlag Chemie GmbH, Weinheim 1979) geht man meist von $\alpha$-FeOOH oder $\gamma$-FeOOH aus, trocknet, entwässert und reduziert bei 350 - 600 °C mit Wasserstoff zum $Fe_3O_4$. Mischphasen aus Magnetit und Maghämit (Berthollide) können durch partielle Oxidation der Magnetitpigmente unter schonenden Bedingungen erhalten werden. Mischphasenpigmente (Berthollide) von Magnetit mit Maghämit und/oder Ferriten werden üblicherweise hergestellt, indem man Ferrite bildende Metalle, wie z.B, Zn, Mn, Co, Ni, Ca, Mg, Ba, Cu oder Cd als Oxide beziehungsweise Hydroxide bei der Herstellung der FeOOH-Vorprodukte mitfällt beziehungsweise auf fertige FeOOH-Pigmente aufbringt und diese konvertiert. Auch diejenigen speziellen Magnetpigmente, die durch Aufbringen einer Beschichtung aus magnetischen Metalloxiden, insbesondere des Eisens und des Cobalts, auf einem Kern aus $Fe_3O_4$ oder einem Eisenoxid mit einem Oxidationszustand zwischen $Fe_3O_4$ und $\gamma$-$Fe_2O_3$ hergestellt werden (z.B. epitaxiale Umhüllung DE-B 22 35 383, DE-A 28 17 410), können geschützt werden. Die Anwendung der erfindungsgemäßen Verfahren wird durch die bekannten, bei der Herstellung magnetischer Pigmente üblichen Maßnahmen gegen Versinterungen sowie Nachbehandlungen und Dosierungen nicht beeinträchtigt.

Gegenstand der vorliegenden Erfindung sind weiterhin Verfahren zur Herstellung der erfindungsgemäßen Eisenoxidpigmente. So kann man in an sich bekannter Weise hergestellte Eisen(II)-haltige Eisenoxidpigmente mit mindestens einer Verbindung der Formel (I) mischen, die erhaltene Mischung gegebenenfalls mahlen und gegebenenfalls abschließend tempern. Es ist auch möglich, daß in an sich bekannter Weise hergestellte Eisen(II)-haltige Eisenoxidpigmente in Suspension mit mindestens einer Verbindung der Formel I behandelt, getrocknet, gegebenenfalls gemahlen und gegebenenfalls abschließend getempert werden.

Die Menge der zugesetzten Verbindung der Formel (I) richtet sich nach der Art der vorgegebenen Eisenoxidpigmente.

Bei den üblichen Eisenoxidschwarz-Pigmenten mit Eisen-(II)-Gehalten zwischen 20 und 28 Gew,-%, gerechnet als FeO, und spezifischen Oberflächen zwischen 12 und 18 $m^2/g$, gemessen mit Hilfe der Stickstoff-1-Punkt-Adsorptionsmethode nach BET, reicht es in der Regel aus, soviel Verbindung (I) zuzusetzen, daß der Gehalt an (I) im behandelten Pigment 0,2 bis 5 Gew.-%, bevorzugt 0,3 bis 2 Gew.-%, beträgt. Die zur magnetischen Signalspeicherung verwendeten Pigmente sind feinteiliger als die Eisenoxidschwarz-Pigmente (BET-Oberflächen - bestimmt nach der $N_2$-1-Punkt-Methode -größer als 18 $m^2/g$) und erfordern

bei gleich hohen Eisen(II)-Gehalten entsprechend ihrer spezifischen Oberfläche, die ohne weiteres 40 $m^2/g$ überschreiten kann, größere Zusatzmengen.

Ist der Eisen(II)-Gehalt niedriger, wie es beispielsweise bei den oben beschriebenen, mit magnetischen Metalloxiden umhüllten Eisenoxid-Magnetpigmenten der Fall sein kann, so kann die Zusatzmenge entsprechend vermindert werden. Die im jeweiligen Einzelfall zur Erreichung der gewünschten Thermostabilität notwendige Behandlungsmenge ist im übrigen für den Fachmann mit Hilfe einfacher Testversuche ohne Schwierigkeiten feststellbar.

Nach dem erfindungsgemäßen Verfahren werden die in an sich bekannterweise hergestellten Eisen(II)-haltigen Eisenoxidpigmente mit einer oder mehreren Verbindungen (I) gemischt. Die Verbindungen (I) werden zweckmäßigerweise zuvor in einen feinteiligen Zustand gebracht. Sie können aber auch in Form einer Lösung oder Suspension in wäßrigem und/oder organischem Medium zugemischt werden. Zum Mischen können gängige technische Apparate verwendet werden, wie z.B. pneumatisch arbeitende Mischer, Schaufelmischer, Schneckenmischer, Trommelmischer oder Konusmischer. Die Mischung kann bei Raumtemperatur oder aber auch bei höheren Temperaturen als Raumtemperatur erfolgen. Manwird im allgemeinen in Gegenwart von Luft arbeiten, jedoch empfiehlt sich insbesondere bei Anwendung höherer Temperaturen die Verwendung von Inertgasen, wie z.B. Stickstoff. Werden nur kleine Mengen der Verbindungen (I) mit großen Mengen Pigment vermischt, so kann eine Vormischung vorteilhaft sein. Die erhaltene Mischung wird dann gegebenenfalls gemahlen. Hierzu sind Mahlaggregate unterschiedlichster Bauart geeignet, z.B. Walzenstühle, Kollergänge, Pendelmühlen, Hammermühlen, Stiftmühlen, Turbomühlen, Kugelmühlen oder Strahlmühlen. Die Mahlung kann bei Raumtemperatur oder höheren Temperaturen als Raumtemperatur oder höheren Temperaturen als Raumtemperatur, gegebenenfalls unter Inertgasen, wie z.B. Stickstoff, durchgeführt werden. Gegebenenfalls wird abschließend bei Temperaturen bis zu 500 °C in inerter oder nur geringe Mengen Sauerstoff enthaltender Atmosphäre getempert.

Nach dem anderen erfindungsgemäßen Verfahren werden die in an sich bekannter Weise hergestellten Eisen(II)-haltigen Eisenoxidpigmente zunächst in Suspension mit einer oder mehreren Verbindungen (I) behandelt. Als Suspensionsmedium wird man im allgemeinen Wasser verwenden, jedoch ist prinzipiell auch der Einsatz wäßrig/organischer oder rein organischer Medien möglich. Die Verbidugnen (I) können zu einem beliebigen Zeitpunkt vor, während oder nach der Herstellung der Pigmentsuspension zugesetzt werden. Die Behandlung kann bei Raumtemperatur oder höherer Temperatur, gegebenenfalls unter Inertatmosphäre, vorgenommen werdend Die Behandlungsdauer beträgt vorzugsweise 1 Minute bis einige Stunden. Das behandelte Pigment wird im zweiten Verfahrensschritt getrocknet. Es hat sich als zweckmäßig erwiesen, die Trocknung so durchzuführen, daß die gesamte Flüssigkeitsmenge der Suspension verdampft wird. Besonders bewährt hat sich hierbei die Sprühtrocknungstechnik. Das behandelte, getrocknete Pigment wird gegebenenfalls wie beim ersten Verfahren gemahlen und gegebenenfalls abschließend bei Temperaturen bis zu 500 °C in inerter oder nur geringe Mengen Sauerstoff enthaltender Atmosphäre getempert.

Thermisch stabile Eisen(II)-haltige Eisenoxidpigmente, welche Mischungen verschiedener Eisenoxid-Farbpigmente sind, werden aus Kostengründen zweckmäßigerweise so hergestellt, daß lediglich diejenigen Mischungspartner, welche zweiwertiges Eisen enthalten, nach einem der beiden erfindungsgemäßen Verfahren vor Oxidation geschützt werden und erst dann die Mischung mit den anderen Eisenoxidpigmenten durchgeführt wird. Es ist aber selbstverständlich auch möglich, die Mischung aus Eisen(II)-haltigen Eisenoxid-Farbpigmenten und Eisen(II)-freien Eisenoxid-Farbpigmenten als Ganzes einem der beiden erfindungsgemäßen Verfahren zu unterwerfen.

Die erfindungsgemäßen thermisch stabilen Eisenoxid-Farbpigmente beziehungsweise -pigmentmischungen haben ihre Einsatzgebiete dort, wo anorganische und/oder organische Materialien eingefärbt werden sollen. Gegenstand dieser Erfindung ist ihre Verwendung zur Farbgebung bei der Herstellung von Kunststoffteilen, von Lacken und von Dispersionsfarben oder Färbung anorganischer Baustoffe, wie z.B. von Putzen, Betondachsteinen oder Kalksandsteinen. Die erfindungsgemäßen thermisch stabilen Eisenoxid-Magnetpigmente können ebenso vorteilhaft zur Fertigung magnetischer Aufzeichnungsmedien jeglicher Art verwendet werden, wie z.B. Audio- und Videobänder, Instrumentationsbänder, Computerbänder, Magnetkarten, Flexible Magnetscheiben, starre Magnetplatten, Trommelspeicher.

Die Erfindung wird nach folgend durch Beispiele näher erläutert, die den Anmeldungsgegenstand jedoch in keiner Weise einschränken.

Beispiele

Herstellung der nachbehandelten Pigmentproben

Zur Nachbehandlung werden jeweils 50 g Pigment[1)]in einem Mischer (Starmix) 30 sec lang mit der Nachbehandlungssubstanz (siehe Tabelle 1) homogenisiert. Während der Mixer läuft, wird die Substanz entweder als Pulver zugegeben, oder sie wird zuvor in Wasser beziehungsweise Propylenglykol gelöst.

Danach werden alle Proben auf die gleiche Restfeuchte eingestellt, indem sie 20 h bei 40 °C im Umlufttrockenschrank gelagert werden.

Anschließend werden alle Proben 3 min lang mit einer Scheibenschwingmühle (Achat-Einsatz) aufgemahlen.

Abtestung der stabilisierenden Wirkung

Alle nachbehandelten Proben werden 1 h lang bei 200 °C auf Aluminiumschälchen im Trockenschrank getempert. Eine unbehandelte Probe und mit Aminotriazol und Borsäure nachbehandelte Proben werden für Vergleichszwecke mitgetempert.

Die Zunahme des Gelbstichs, als Restfarbdifferenz nach Farbstärkenangleich, wird zu Bewertung der Stabilität herangezogen. Dazu werden auf einer Tellerfarbenausreibmaschine reibmaschine (Ø 25 mm) 0,2 g des nachbehandelten Schwarzpigments in 5 g Weißpaste (bestehend aus 3 g Alkydal® L64 - Handelsprodukt der BAYER AG - und 2 g Rutil) dispergiert. Die Koloristik dieser Probe wird mit einem spektralen Farbmeßgerät (DATA FLASH 2000, Geometrie d/8) bestimmt,

In Tabelle 1 sind die verwendeten Nachbehandlungsmittel, die Art der Aufbringung und die Ergebnisse der Temperversuche zusammengefaßt.

[1)] Magnetitpigment mit einer spezifischen Oberfläche von 17,9 $m^2/g$ (nach BET) und einem Eisen(II)-Gehalt von 24,2 % berechnet als FeO

Tabelle 1

| Nachbehandlungsmittel | Menge Gew.-% | Aufbringung | Gelbverfärbung nach 1 h 200° C Δ b* |
|---|---|---|---|
| - | - | - | 3,9 |
| 3-Amino-1,2,4-triazol | 1,0 | trocken, | 2,1 |
| | " | 5%ig in Wasser | 2,1 |
| Borsäure | 1,0 | trocken, | 2,2 |
| | | 5%ig in Propylenglykol | 2,4 |
| Phthalsäurehydrazid | 1,0 | trocken | 1,8 |
| Maleinsäurehydrazid | 1,0 | trocken | 1,7 |

Aus der Tabelle wird deutlich, daß die erfindungsgemäß stabilisierten Proben gegenüber dem Stand der Technik zu einer geringeren Gelbverfärbung führen und die Pigmente damit eine höhere Temperatur-Stabilität aufweisen.

## Patentansprüche

**1.** Eisenoxidpigmente mit einem Gehalt an Eisen(II) von mindestens 5 %, berechnet als FeO, mit einer Beschichtung zur Erhöhung der Stabilität gegenüber Luftoxidation aus mindestens einer Verbindung der allgemeinen Formel (I)

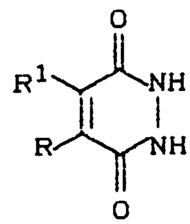

(I)

in der
R und $R^1$ gleich oder verschieden für Wasserstoff oder einen geradkettigen oder verzweigten Alkylrest mit 1-2 C-Atomen, oder Halogen oder einen Arylrest mit 6-10 C-Atomen oder zusammen einen gegebenenfalls substituierten $C_{3-6}$-Alkylenrest oder für ringbildendes -CH = CH-CH = CH- stehen,

2. Eisenoxidpigmente gemäß Anspruch 1, dadurch gekennzeichnet, daß die Mengen der Beschichtung einer Verbindung der allgemeinem Formel I 0,2 bis 5 Gew`-%, bevorzugt 0,3 bis 2 Gew.-%, bezogen auf das Pigment beträgt.

3. Eisenoxidpigmente gemäß einem der Anspüche 1 oder 2, dadurch gekennzeichnet, daß die Eisenoxidpigmente Eisenoxidschwarz- und/oder Eisenoxidbraun-Farbpigmente sind.

4. Eisenoxidpigmente gemäß einem der Ansprüche 1 oder 2, dadurch gekennzeichnet, daß die Eisenoxidpigmente Magnetit oder Mischphasen von Magnetit mit Maghämit (Berthollide-Eisenoxide) und/oder Ferriten sind.

5. Eisenoxidpigmente gemäß einem der Ansprüche 1, 2 oder 4, dadurch gekennzeichnet, daß die Eisenoxidpigmente mit magnetischen Metalloxiden umhüllte Magnetite beziehungsweise Eisenoxide mit einem Oxidationszustand zwischen Magnetit und Maghämit sind.

6. Verfahren zur Herstellung der Eisenoxidpigmente gemäß einem oder mehreren der Ansprüche 1 bis 5, dadurch gekennzeichnet, daß in bekannter Weise hergestellte Eisenoxidpigmente mit mindestens einer Verbindung (I) gemischt werden, die Mischung gegebenenfalls gemahlen und gegebenenfalls anschließend getempert wird.

7. Verfahren zur Herstellung der Eisenoxidpigmente gemäß einem oder mehreren der Ansprüche 1 bis 5, dadurch gekennzeichnet, daß in bekannter Weise hergestellte Eisenoxidpigmente in Suspension mit mindestens einer Verbindung (I) behandelt, getrocknet, gegebenenfalls gemahlen und gegebenenfalls anschließend getempert werden.

8. Verfahren gemäß einem der Ansprüche 6 oder 7, dadurch gekennzeichnet, daß als Verbindung der Formel (I) Phthalsäure- oder Maleinsäurehydrazid eingesetzt wird.

9. Verwendung der Eisenoxidpigmente gemäß einem oder mehreren der Ansprüche 1 bis 8 zur Einfärbung von Kunststoffen, Lacken, Dispersionsfarben und Baustoffen.

10. Verwendung der Eisenoxidpigmente gemäß einem oder mehreren der Ansprüche 1 bis 8 zur Herstellung von magnetischen Aufzeichnungsträgern.

## Claims

1. Iron oxide pigments with an iron(II) content of at least 5 %, calculated as FeO, with a coating for raising the stability towards air oxidation consisting of at least one compound of the general formula (I)

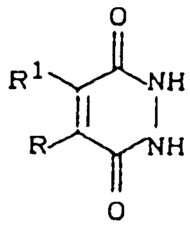

( I )

in which
R and $R^1$, which are the same or different, represent hydrogen or a straight-chain or branched alkyl group with 1-2 C atoms, or halogen or an aryl group with 6-10 carbon atoms or together represent an optionally substituted $C_{3-6}$ alkylene group or ring-forming -CH=CH-CH=CH-.

2. Iron oxide pigments according to Claim 1, characterized in that the amount of the coating of a compound of general formula I is 0.2 to 5 wt%, preferably 0.3 to 2 wt%, relative to the pigment.

3. Iron oxide pigments according to one of Claims 1 or 2, characterized in that the iron oxide pigments are iron oxide black and/or iron oxide brown colouring pigments.

4. Iron oxide pigments according to one of Claims 1 or 2 characterized in that the iron oxide pigments are magnetite or mixed phases of magnetite with maghemite (berthollide iron oxides) and/or ferrites.

5. Iron oxide pigments according to one of Claims 1, 2 or 4, characterized in that the iron oxide pigments are magnetites or iron oxides with an oxidation state between magnetite and maghemite, coated in each case with magnetic metal oxides.

6. A process for the production of iron oxide pigments according to one or more of Claims 1 to 5, characterized in that iron oxide pigments produced in known manner are mixed with at least one compound (I) and the mixture optionally ground and optionally then annealed.

7. A process for the production of the iron oxide pigments according to one or more of Claims 1 to 5, characterized in that iron oxide pigments produced in known manner are treated in suspension with at least one compound (I), dried, optionally ground and optionally then annealed.

8. A process according to one of Claims 6 or 7, characterized in that phthalhydrazide or maleic hydrazide is used as a compound of formula (I).

9. The use of the iron oxide pigments according to one or more of Claims 1 to 8 for the colouring of plastics, lacquers, emulsion paints and building materials.

10. The use of the iron oxide pigments according to one or more of Claims 1 to 8 for the production of magnetic recording media.

**Revendications**

1. Pigments d'oxydes de fer contenant au moins 5 % de Fe-II, exprimé en FeO, et portant un revêtement qui accroît leur stabilité à l'oxydation par l'air, d'au moins un composé de formule générale I

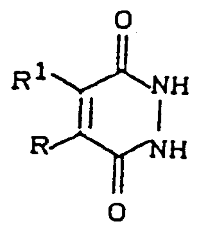

(I)

dans laquelle R et $R^1$, ayant des significations identiques ou différentes, représentent chacun l'hydrogène ou un groupe alkyle à chaîne droite ou ramifiée en $C_1$-$C_2$, ou un halogène ou un groupe aryle en $C_6$-$C_{10}$, ou bien R et $R^1$ forment ensemble un groupe alkylène en $C_3$-$C_6$ éventuellement substitué ou un groupe -CH = CH-CH = CH- complétant un cycle.

**2.** Pigments d'oxydes de fer selon revendication 1, caractérisés en ce que la quantité d'un composé de formule générale I appliquée en revêtement est de 0,2 à 5 %, de préférence de 0,3 à 2 % du poids du pigmemt.

**3.** Pigments d'oxydes de fer selon une des revendications 1 ou 2, caractérisés en ce qu'ils consistent en pigments colorés d'oxyde de fer noir et/ou d'oxyde de fer brun.

**4.** Pigments d'oxydes de fer selon une des revendications 1 ou 2, caractérisés en ce qu'ils consistent en magnétite ou en phases mixtes de magnétite et de maghémite (oxydes de fer berthollides) et/ou ferrites.

**5.** Pigments d'oxydes de fer selon une des revendications 1, 2 ou 4, caractérisés en ce qu'ils consistent en magnétite ou oxydes de fer enrobés d'oxydes métalliques magnétiques, à un stade d'oxydation intermédiaire entre la magnétite et la maghémite.

**6.** Procédé de préparation des pigments d'oxydes de fer selon une ou plusieurs des revendications 1 à 5, caractérisé en ce que l'on mélange des pigments d'oxydes de fer préparés de manière connue avec au moins un composé I, le cas échéant on broie le mélange et le cas échéant on le cuit.

**7.** Procédé de préparation des pigments d'oxydes de fer selon une ou plusieurs des revendications 1 à 5, caractérisé en ce que l'on traite des pigments d'oxydes de fer préparés de manière connue, en suspension, par au moins un composé I, on sèche le cas échéant on broie et le cas échéant on cuit.

**8.** Procédé selon une des revendications 6 ou 7, caractérisé en ce que l'on utilise en tant que composé de formule I l'hydrazide phtalique ou l'hydrazide maléique.

**9.** Utilisation des pigments d'oxydes de fer selon une ou plusieurs des revendications 1 à 8 pour la coloration dans la masse des résines synthétiques, des verais, des peintures en dispersion et des matériaux de construction.

**10.** Utilisation des pigments d'oxydes de fer selon une ou plusieurs des revendications 1 à 8 pour la fabrication de supports d'enregistrement magnétiques.